# EUROPEAN PATENT APPLICATION

(11) **EP 1 605 019 A1**
(43) Date of publication of application: **14.12.2005**
(21) Application number: 04014713.4
(22) Date of filing: 23.06.2004
(51) Int. Cl.: C08L 83/04, B60S 1/38

(54) **Self-lubrificating organisilicone rubber material, process for its preparation and use thereof**

(30) Priority: 11.06.2004 CN 200410048973
(71) Applicant: SAR HOLDINGS INTERNATIONAL LIMITED, Hong Kong (CN)
(72) Inventor: Yeung, Rickey c/o SAR Holdings Int.Ltd., 21 Yiu Wa Street Causeway Bay Hong Kong (CN)
(74) Representative: Koepe, Gerd L.

(57) **Abstract**

The present invention provides a self-lubricating organosilicone rubber material, comprising organosilicone rubber, a self-lubricating additive, a filler, and a curing agent, and optionally a releasing agent and optionally a colorant, and a process for the production thereof. The self-lubricating organosilicone rubber materials of the present invention may be used in various glass cleaning devices, especially as wiper.

## Description

### Technical Field

The present invention relates to an organosilicone rubber material, in particular, to a self-lubricating organosilicone rubber material containing a self-lubricating additive. The present invention also relates to a process for producing the self-lubricating organosilicone rubber material and the use thereof, for example, as a windshield wiper.

### Background Art

A windshield wiper can clean the windshield and improve the vision for the driver of a moving vehicle. Conventional wipers are made of natural rubber materials. As the natural rubber materials have poor weather resistance and age fast, such wipers cannot clean well after a short period of use and at the same time, the wipers jump and produce squeak when traversing windows.

Many attempts have been made in order to solve the above problems. For example, various coatings were applied onto the surface of rubber to improve the contact surface between rubber and glass so as to enhance the cleaning effect. Attempts have also been made in replacing conventional natural rubbers with silicone rubbers, because silicone rubbers possess excellent properties of resistance to weather and aging. However, the high friction between silicone rubbers and glass causes the application of silicone rubbers in this field difficult.

TW412487 discloses a windshield wiper based on a silicone rubber, comprising fluorine-containing compounds and glass microballs to improve the drawback of the high friction between silicone rubber and glass. However, the addition of the glass balls would result in difficulty in compounding the materials. Also, it seems unavailable to combine silicone rubbers with glass balls. Besides, glass balls may break to cause the safety problem.

WO 03/050191 discloses a windshield wiper having reduced friction, comprising a methyl vinyl silicone polymer, a filler and a friction-reducing additive such as PTFE (polytetrafluoroethylene). Though certain amounts of PTFE may provide friction-reducing qualities, the plasticity of the resulting compound is increased to an extent that extrusion and molding of the compound is difficult or impossible.

### Contents of the Invention

The inventor of the present invention surprisingly found that by combining an organosilicone rubber with a self-lubricating solid additive, as well as with other adjuvant components, a self-lubricating organosilicone rubber material can be obtained. Such material possesses excellent self-lubricating properties and is conveniently produced. Such material overcomes the defects of the prior arts as mentioned above and has a prospect of being widely used.

An object of the present invention is to provide an organosilicone rubber material having self-lubricating properties.

Another object of the present invention is to provide a process for producing the self-lubricating organosilicone rubber material.

A further object of the present invention is to provide a product produced from the self-lubricating organosilicone rubber material of the present invention.

The present invention provides a self-lubricating organosilicone rubber material, comprising an organosilicone rubber, a self-lubricating additive, a filler, and a curing agent, and optionally a releasing agent and optionally a colorant.

The present invention also provides a process for producing the self-lubricating organosilicone rubber material, comprising the steps of: mixing organosilicone rubber, a self-lubricating additive and a filler, then adding a curing agent, and optionally a releasing agent and optionally a colorant into the mixture.

The present invention will be explained in detail as follow.

### Organosilicone rubber

There is no limitation to the organosilicone rubbers used in the present invention. All kinds of organosilicone rubbers that are conventionally used in this field can be used. For example, dimethyl silicone polymer, methyl vinyl silicone polymer, methyl styryl silicone polymer, methyl trifluoropropyl silicone polymer, etc. The above mentioned organosilicone rubbers can be used alone or in combination.

The preferred organosilicone rubbers are those with the terminal group being methyl, vinyl or the combination thereof, for example:
Me₃SiO(Me₂SiO)ₙSiMe₃,
Me₃SiO(Me₂SiO)ₙ(MeViSiO)ₘSiMe₂R,
RMe₂SiO(Me₂SiO)ₙ(MePhSiO)₁(MeViSiO)ₘSiMe₃,
Me₃SiO[Me(CF₃CH₂CH₂)SiO]ₙSiMe₃, wherein Me represents methyl; n, m and l, may be same or different, represent an integer larger than zero; R represents methyl or vinyl; Vi represents vinyl.

The organosilicone rubber may be present at an amount of 10% to 70% by weight, preferably 30% to 60% by weight, relative to the total weight of the self-lubricating organosilicone rubber material.

### Self-lubricating additive

Self-lubricating additives are those which are capable of rendering an organosilicone rubber self-lubricating so as to reduce the friction between the organosilicone rubber and glass, and/or reduce the jump and squeak when the organosilicone rubber traverses the windshield.

The self-lubricating additives suitable for the present invention may be those selected from graphite, fluorine-containing compounds, boron nitride, dimethyl silicone oil, methyl hydrogen-containing silicone oil, ethyl silicone oil, vinyl silicone oil, stearate and the mixtures thereof. The preferred self-lubricating additives are those selected from fluoro-graphite, Teflon powder, methyl hydrogen-containing silicone oil, vinyl silicone oil, zinc stearate, barium stearate and the mixtures thereof.

There is no special limitation to the amount of the self-lubricating additive used, as long as said amount can make the material having the desirable self-lubricating properties. Generally, the self-lubricating additive may be present at an amount of 2% to 30% by weight, preferably 3% to 20% by weight, relative to the total weight of the self-lubricating organosilicone rubber material.

### Filler

The fillers which are known in the art and capable of improving the mechanical properties of organosilicone rubbers are suitable for the present invention, for example, the strengthening fillers known in the art. The preferred fillers of the present invention include synthesized silica micropowder, natural quartz powder, diatomaceous earth, kaolin, etc.

The filler may be present at an amount of 20% to 70% by weight, preferably 30% to 60% by weight, relative to the total weight of the self-lubricating organosilicone rubber material.

### Curing agent

The curing agents which are known in the art can be used in the present invention. The preferred curing agents include various organic peroxides. Benzoyl peroxide is preferably used according to the present invention.

Generally, it is required for a curing agent to be present in an amount of 1% to 2% by weight relative to the total weight of the self-lubricating organosilicone rubber material.

### Releasing agent

The releasing agents which are known in the art can be used in the present invention, as necessary. The amount of the releasing agent can be determined by an ordinarily skilled in the art based on his common knowledge.

### Colorant

Various commercially available colorants, which are suitable for organosilicone rubbers, can be added into the material of the present invention according to the requirement of color, as necessary. The amount of the colorant can be determined by an ordinarily skilled in the art based on his common knowledge.

The self-lubricating organosilicone rubber material according to the present invention can be produced by the following process:
(1) an organosilicone rubber, a self-lubricating additive and a filler are mixed, e.g., in an internal batch mixer;
(2) a curing agent, an optional releasing agent and an optional colorant are added into the mixture obtained in step (1);
(3) the mixture obtained in step (2) stands still; and
(4) optionally, the product obtained in step (3) is made to a desired article.

Most specifically, an organosilicone rubber, a self-lubricating additive and a filler are added into an internal batch mixer and mixed thoroughly. The resulted mixture stands still for 1 to 24 hours to allow the self-lubricating additive to disperse sufficiently into the filler. The mixture is then added into a blender mill, into which a curing agent, an optional releasing agent and an optional colorant are added and mixed. Such resulted mixture stands still for 12 hours or more to allow the curing agent to disperse sufficiently.

The self-lubricating organosilicone rubber materials of the present invention can be made to the desired products by a conventional molding or extrusion method.

The self-lubricating organosilicone rubber materials of the present invention can be used in various applications where a self-lubricating material is needed, for example, various glass cleaning devices, tubing that needs self-lubricating material such as peristaltic pump tubing, etc.

The self-lubricating organosilicone rubber material of the present invention is especially suitable for a windshield wiper. The windshield wiper produced by the self-lubricating organosilicone rubber material of the present invention has excellent self-lubricating and water repellent properties. They clean windows very well without any trace of water while without jumping and squeak. In addition, such windshield wiper has excellent properties of resistance to temperatures, UV and ozone, etc. so that they possess desirable stable quality and properties of resistance to weather and aging, and thereby the windshield wiper obtained from the materials of the present invention is no longer a short term consumable while having desirable self-lubricating and cleaning properties. It may, however, also be used in other means, e. g. wipers for manually cleaning windows. The comparative characteristics between a conventional wiper and a wiper of the present invention are given in the below table:

| | Conventional wiper | Wiper of the present invention |
|---|---|---|
| weather resistance | poor | Excellent |
| water repellent | passable | Self-lubricating |
| Jumping | passable | None |
| Color | black | Adjustable |

### Mode of Carrying out the Invention

### General preparation steps:

A specified amount of an organosilicone rubber, self-lubricating additive and a filler were mixed thoroughly in an internal batch mixer and the resulted mixture stood still for 24 hours so as to allow the self-lubricating additive to disperse sufficiently into the filler. The mixture was then added into a blend mill, into which a curing agent, a releasing agent and a colorant were added and mixed sufficiently. Such resulted mixture stood still for 24 hours. The following examples were carried out following the above general preparation steps:

| | **Example 1** | | **Example 2** | | **Example 3** | |
|---|---|---|---|---|---|---|
| Organosilicone rubber | QT-040U 800g | | QT-060U 850g | | QT-080U 850g | |
| Self-lubricating additive | MD-188A 150g | | MD-188A 70g | | MD-188A 300g | |
| Filler | PD-30 300g | Quartz powder 300g | 30µ quartz powder 585g | 10µ quartz powder 585g | **Diatom-aeous earth** 520g | **PD-30** 520g |
| Curing agent | benzoyl peroxide 20g | | benzoyl peroxide 36g | | benzoyl peroxide 40g | |
| Releasing agent | QA-850B 1.5g | | QA-850B 2.1g | | QA-850B 2.5g | |
| Colorant | Black 1.5g | | -- | | Blue 2.5g | |
| Notes to the above Table: QT-040U: commercially available from Qanta Silicones Ltd. (Taiwan); QT-060U: commercially available from Qanta Silicones Ltd. (Taiwan); QT-080U: commercially available from Qanta Silicones Ltd. (Taiwan); MD-188A: a mixture of a fluorine-containing compound(s) and a stearate(s), commercially available from Xinzhong Limited Company, Taiwan; QA-850B: commercially available from Qanta Silicones Ltd. (Taiwan); PD-30: 30µ calcinate kaolin, commercially available from Liyang Electron Technology Ltd. (Dongguan, China). | | | | | | |

### Test of self-lubricating effect

The self-lubricating organosilicone rubber materials produced by the above Examples were made to articles by molding method. The articles were then exposed to sunshine. After exposure of 1 to 2 weeks, the surface of the articles was still water repellent, and an oil thin layer was shown in the surface to give a lubricating feeling.

The above Examples are only for the purpose of illustrating the present invention but do not constitute any limitation of the present invention. An ordinarily skilled in the art may change or modify the present invention without departing from the spirit thereof while these changes and modifications are within the scope of the present invention.

## Claims

1. A self-lubricating organosilicone rubber material, comprising organosilicone rubber, a self-lubricating additive, a filler, and a curing agent, and optionally a releasing agent and optionally a colorant.

2. The material according to claim 1, wherein said self-lubricating additive is selected from graphite, fluorine-containing compounds, nitride boron, dimethyl silicone oil, methyl hydrogen-containing silicone oil, ethyl silicone oil, vinyl silicone oil, stearate and the mixtures thereof.

3. The material according to claim 1 or 2, wherein said self-lubricating additive is selected from fluoro-graphite, Teflon powder, methyl hydrogen-containing silicone oil, vinyl silicone oil, zinc stearate, barium stearate and the mixtures thereof.

4. The material according to any of claims 1 to 3, wherein said self-lubricating additive is MD-188A.

5. The material according to any of claims 1 to 4, wherein said filler is selected from quartz powder, kaolin and the mixtures thereof.

6. The material according to any of claims 1 to 5, wherein said filler is kaolin.

7. The material according to any of claims 1 to 6, wherein said curing agent is benzoyl peroxide.

8. The material according to any of claims 1 to 7, wherein said organosilicone rubber is present at an amount of 10% to 70% by weight relative to the total weight of the self-lubricating organosilicone rubber material.

9. The material according to any of claims 1 to 8, wherein said self-lubricating additive is present at an amount of 2% to 30% by weight relative to the total weight of the self-lubricating organosilicone rubber material.

10. The material according to any of claims 1 to 9, wherein said self-lubricating additive is present at an amount of 3% to 20% by weight relative to the total weight of the self-lubricating organosilicone rubber material.

11. The material according to any of claims 1 to 8, wherein said filler is present at an amount of 20% to 70% by weight relative to the total weight of the self-lubricating organosilicone rubber material.

12. A process for producing the self-lubricating organosilicone rubber material according to any of claims 1 to 11, comprising the steps of: mixing organosilicone rubber, a self-lubricating additive and a filler, then adding a curing agent, and optionally a releasing agent and optionally a colorant into the mixture.

13. The process according to claim 12, comprising the following steps:
(1) add organosilicone rubber, a self-lubricating additive and a filler into an internal batch mixer, mix them, and the resulted mixture stands still for 1 to 24 hours;
(2) add the mixture obtained in step (1) into a blender mill, into which a curing agent, a releasing agent and a colorant are added, and mix them; and
(3) the mixture obtained in step (2) stands still for 12 hours or more.

14. A windshield wiper produced from the self-lubricating organosilicone material according to any of claims 1 to 11.
